# EUROPEAN PATENT APPLICATION

(11) **EP 2 312 374 A1**
(43) Date of publication of application: **20.04.2011**
(21) Application number: 09757076.6
(22) Date of filing: 02.06.2009
(51) Int. Cl.: G02B 27/10, G02B 27/26, G02B 27/18, G03B 21/00

(54) **COMPOSITE IMAGE GENERATION SYSTEM**

(30) Priority: 07.06.2008 CN 200810123156
(71) Applicant: Wang, Yongjing, Jiangsu 215163 (CN)
(72) Inventor: Wang, Yongjing, Jiangsu 215163 (CN)
(74) Representative: Warrilow, David Thomas
(86) International application number: PCT/CN2009/072082
(87) International publication number: WO 2009/146642

(57) **Abstract**

This invention discloses a system that produces a compound image. It comprises 1) an illumination system producing at least two spatially separated illumination zones where the illuminating lights have different optical properties; 2) a display panel having at least two segments that display the component information of a compound image respectively; 3) a lens system that produces images; 4) a redirecting element that redirect the different types of light at different angles. The optical properties of light includes but are not limited to, different colors and different polarizations. For a system using different colors, it produces color images. For a system using different polarizations, it produces three dimensional images. The advantages of the current invention are simple, low cost, and highly efficient. Its applications include near-to-eye display systems, projection display systems, and three-dimensional display systems.

## Description

### TECHNICAL FIELD

The invention generally pertains to projection display systems and more particularly to a new color projection display system using a single display panel and a new color management mechanism.

### Background:

Almost all of the display panel technologies can only produce monochromatic in nature. To implement a color display, techniques are needed to produce color. There are several ways to produce color either in the spatial domain or time domain.
   1) The color filter method is widely used in direct viewing displays and projection displays. Three sub-pixels covered by red-green-blue micro color filters form a full color pixel. However, there are many disadvantages in this method. First, its efficiency is low since two-thirds of the light energy is lost. Second, the color filter is difficult to be manufactured on the backplane of the micro display panel.
   2) The three-panel structure method utilizes three panels to generate three pictures of three primary colors. A color combination prism is used to merge three monochrome pictures into a color picture. This method for projection display is expensive since three micro display panels are used. Almost all high temperature polysilicon (HTPS) micro display projection systems and some liquid crystal on silicon (LCOS) micro display projection systems utilize this method.
   3) The color sequential method utilizes one panel illuminated sequentially by different colors. Pictures then merge to produce color pictures. This method is simpler and lower cost. However, it requires an electronic system of high data bandwidth and a display panel with fast response time. As a consequence, cost of this method is also high. Moreover, sequential color method cuts off two-thirds of the white light, therefore its optical efficiency is low. Color artifacts are also a problem.

### DISCLOSURE OF THE INVENTION

The purpose of this invention is to provide a system that can produce compound images using a single display panel or multiple panels placed substantially close to each other but in substantially the same plane. The components of a compound picture are coded at different angles first then an optical beam redirecting means are used to merge them to a compound picture on a screen. In one embodiment, the system produces color images. In another embodiment, the system produces three-dimensional images.

The invention, a new system producing compound images is comprised of:
1). An illumination system producing at least two spatially separated illumination zones where illumination lights have different optical properties;
2). A single display panel or at least two display panels placed substantially close to each other, said panel(s) has at least two zones that display the information of components of compound images;
3). A lens system producing image;
4). Optical beam redirection means that redirect different types of light at different angles;
5). another lens system.

### Further explanations of present inventions:

In one embodiment, said optical property of illumination light is color of light. The illumination system illuminates different zones of the display panel with different colors. The lens system encodes the different color at different angles. The optical beam redirection means selectively redirect different color light by different angle (to substantially the same angle) to form a color picture onto the screen or to viewer's eyes. The system produces color images.

In other embodiment, said optical property of illumination light is the polarization of the light. The system produces three-dimensional images based on similar principle like proceeding embodiment.

The light source of the illumination system can use any kind of high brightness light source technology, including but not limited to high-brightness projection light source, incandescent lamps, arc lamp, LED, laser, and OLED.

When the illumination system uses wide band light sources such as incandescent lamp, arc lamp or white LED, the illumination system further comprises at least one cascading color splitting system. The color splitting system splits the white light in to red, green and blue light with an efficiency substantially close to 100%. The system further comprises one or more light wave guide, aka light pipe or light tunnel, to modify the distribution of light beam and to conduct light beam onto different zones on the panel.

In an alternative embodiment, the illumination system comprises at least two monochrome LEDs or OLEDs as light sources. The light from light source is coupled onto the panel by the following means: light wave guide, lens, or direct coupling. To reduce the Fresnel loss from interfaces, optical glue can be used to connect the LED light source, light wave guide, color splitting prism, and display panel. The whole system forms a compact unibody structure. If multiple light wave guides are used, low refractive index material between each light pipes to eliminate the color cross talk between different color channels.

The display panel can be any one of the existing micro display technologies, including but not limited to LCD , MEMS, liquid crystal on silicon (LCOS) device, and OLED panel. The display panel can be a reflective panel, transmissive panel, or self-emitting panels. In the embodiment with self emitting panel such as LED or OLED panels, the light source and display panel are combined together.

In all embodiments of the current invention, two or more display panels placed substantially close to each other can be used instead of one single panel. Those skilled in the art should also realize that such equivalent constructions do not depart from the spirit and scope of the invention in its broadest form.

Said lens system that encodes the different types of light at different angles and produce images, further comprises a lens that is substantially close to the display and works as a field lens.

Said optical beam redirected element can be comprised of dichroic mirror systems or holographic devices that selectively direct one type light without disturbing other types of light.

In the embodiment of present invention using dichroic mirrors, said dichroic mirror system comprises of at least two dichroic mirrors that reflect different color light. Said dichroic mirror reflects one color light and transmit other color lights. The thickness of the dichroic mirror varies from 0.001 mm to 100 mm. The dichroic mirror coating on the substrate can be on the front surface or on the rear surface. In one embodiment, the first dichroic mirror is coated on the rear surface; the second dichroic mirror is coated on the front surface. There is no substrate material between the two coated surfaces; therefore there is no optical path difference between different colors.

In one embodiment of the lens system, two color lights are spatially separated without overlapping at one location. Said dichroic mirrors are placed at this location. The dichroic mirrors can be arranged with one edge adjacent to each other without cross over. All dichroic mirrors are one piece mirror.

The lens systems and optical beam redirection means work together as a light combiner to combine a monochrome picture into to a color image. The light combiner can take many different forms. Dichroic mirrors are made by optical multiple layer coating or other suitable material. The location of the dichroic mirror can be located before the lens unit, within the lens units and after the lens units. The different locations of dichroic mirrors result in a different but equivalent optical system. Those skilled in the art should also realize that such equivalent constructions do not depart from the spirit and scope of the invention in its broadest form.

Besides the optical system in the current invention, the system producing the compound image is further comprised of an electronic system. The electronic system is comprised of 1)input unit accepting digital or analog signal, 2) a hardware/software splitting the signal into its components, 3)means driving the different portion of display panel using the components of input signal, and 4) means to pre-distort the image to compensate the optical distortion.

In other embodiment of present invention, two light beams polarized at different direction illuminate two different portions of a display panel or two panels placed substantially close to each other. Each portion of the display panel displays an image of one components of a 3D image for each eye. A lens and a light beam redirection device produces substantially convergent image onto a screen. A viewer wears polarization glasses. The right eye of the viewer only sees the image for right eye; the left eye only sees the image for left eye. A three-dimensional (3D) image is conceived.

The concepts described in different embodiments of present invention are applicable in near-to-eye display, projection display, and 3D display.

In the embodiment with self emitting panel such as LED or OLED panels, the light source and display panel are combined together. It comprises 1) a self emitting panel with at least two zones for different color or at least two panels placed substantially close to each other, 2) a lens system, 3) redirection means that can combine monochrome image together to a color image. And second lens system.

Compared with the existing technology in prior art, this invention has the following advantages:
1, Compared with the three-panel structure, it has only one display panel. It greatly reduces the cost of display panel. It does not use the expansive color light combination element, thus the system cost is reduced.
2, Compared with the existing single-panel structure, it greatly increase the color efficiency, eliminates the color artifacts, reduces the bandwidth requirements of the electronic driver system and the responded time of the display panel.
3, Compared with the existing color filter technology, it greatly increases the color efficiency, reduces the cost of display panel, improves life time of the display panel and reliability of the display panel.

### Brief Description of Drawings

FIGURE 1 is a schematic diagram of the first embodiment of the present invention wherein a transparent panel is used as a display panel.
Figure 2 is a schematic diagram of a lens system of current invention.
Figure 3 is schematic diagram showing two embodiment of the arrangement of tilted dichroic mirrors.
Figure 4 is schematic diagram showing three tilted dichroic mirrors in a simplified arrangement.
Figure 5 is a schematic diagram of an LED illumination system utilizing light pipe coupling.
Figure 6 is a schematic diagram of an embodiment of the present invention wherein three emitting panels are used as the display panel.
Figure 7 is a schematic diagram of the fourth embodiment of the present invention wherein one emitting panel is used as the display panel.
Figure 8 is schematic diagram of design of dichroic mirrors
Figure 9 is a schematic diagram of an embodiment wherein the lens system uses grating or hologram components.
Figure 10 6 is a schematic diagram of an alternative embodiment of the present invention wherein 3D image is produced.
Figure 11 is function low chart of electronic system of present invention.
Figure 12 is a schematic diagram of alternative embodiment of the present invention wherein a reflective panel is used as the display panel.
Figure 13 is a schematic diagram of alternative embodiment of the present invention where white LED and transmissive panels are used.
101: Light source; 103: color splitting prism; 107: light pipe; 109: display panel; 111: first lens unit of lens system; 113,115,117: three dichroic mirrors; 118: second lens unit of lens system; 119: Screen or the human eyes.
201: second lens unit of lens system; 203,205,207: three dichroic mirrors; 207 to 221: lenses of first lens unit of lens system; 223: display panel; a, b, c: different color zones on the display panel;
301 and 311: two parts of the first dichroic mirror; 303 and 309: the two parts of the second dichroic mirror; 305 and 307: two parts of the third dichroic mirror; 313: a rotating axis.
401: first dichroic mirror; 403: second dichroic mirror; 405: third dichroic mirror.
501 to 503: LED light sources at different color; 505: light pipe; 509: display panel with three display areas; 511: first lens unit of lens system; 517: second lens unit of lens system; 513: three dichroic mirrors.
601 603 605: OLED self emitting display panel; 607: color combination prism; 609: lens system.
701: OLED self emitting display panel; 703,705, 707: different color zones on the display panel; 713: color combination system; 709: three dichroic mirrors; 715: screen or human eyes.
801,802 and 803: dichroic mirrors. 805,807,809: Multi-layer dichroic mirror coating on dichroic mirrors.
905: holographic color combination element; 901: display panel; 909: color combination system; 903 and 907: lens units; 911: screen or human eyes.
1001 : display panel; 1003: first zone on the display panel generating one polarization light; 1005: second zone on the display panel generating another polarization light; 1009: beam redirection mirror; 1013: Polarization combination system; 1021 and 1023: left eye and right eye; 1017 and 1019: polarizer; 0125 and 1027: lenses in the system.
1201: reflective display panel; 1203, 1205,1207: display zones with different color. 1202: illumination light with three different color zones; 1211: total internal reflection prism or polarization beam splitter; 1214: first lens unit of the lens system; 1209: three dichroic mirrors; 1213: second lens unit of lens system, 1215: screen or human eyes.
1301: white LED; 1303: light wave guide ; 1305: color splitting prism ; 1307: Display Panel; 1309: the first unit of lens system; 1311: Dichroic mirrors ; 1313 the second unit of lens system

### BEST MODE FOR CARRYING OUT THE INVENTION

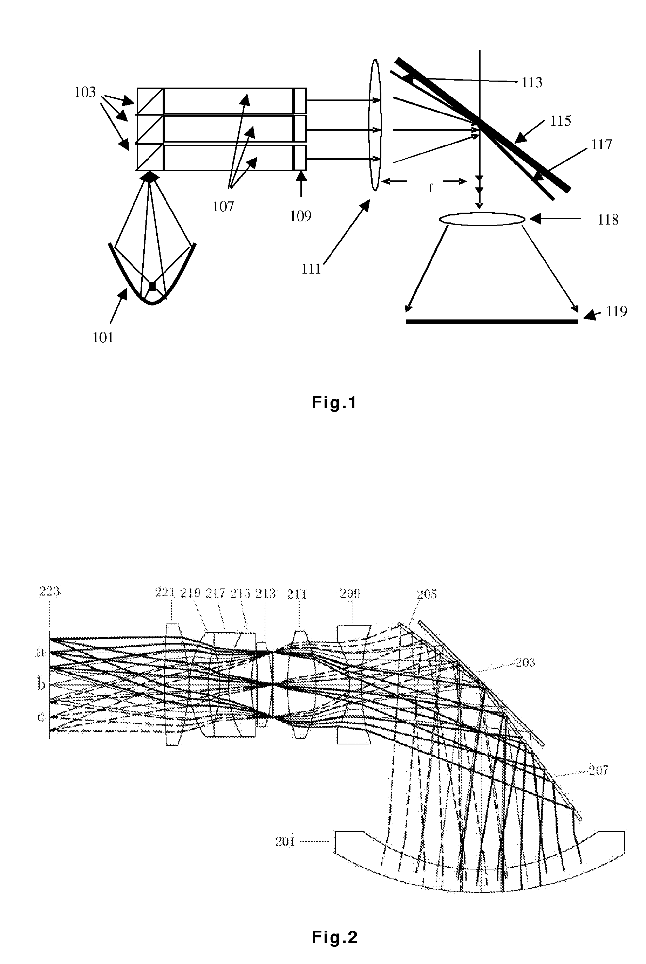

As shown in FIGURE 1, the first embodiment of the system is comprised of a white light source 101, a cascading color splitting system 103 that produce red green and blue three illumination zones. Three color lights pass thought three wave guides, aka light pipe 107. Light pipe 107 homogenizes the illumination area and modifies the light distribution. Light source 101, color splitting prism 103 and light pipe 107 form an illumination system. 109 is a display panel with three different zones where three images corresponding the illumination colors are displayed. Said three images are three components (red green and blue) of a full color image. The three zones are illuminated by corresponding colors to form three color images. Three color images are located at different height with a departure distance of d. The color information is encoded by height. The color light passes through the first unit of lens system 111 with an effective focal length of f. There is at least one lens in 111. At the location of focal plane of 111, different colors are distributed at different angles. i.e. colors are encoded in angular domain. The function of lens 111 is to encode color in angular domain. Dichroic mirror 113, 115, and 117 tilting at different angles redirect the color light by different angles. The actual tilting angle of said dichroic mirrors are determined by optical design. Another lens unit 118 then produces the color image to a screen or human's eyes (119). 111, 113, 115, 117, 118 form a color combination system.

The light source of current invention can be any existing light source, including but not limited to lamp, arc lamp, LED, laser, and OLED. The display panel of current invention can be any existing display panel technology, including but not limited to LCD, MEMD, LCOS, and OLED. The display panel can be transparent, reflective or self emitting panels. For a self emitting panel, the illumination system and display panel are merged together. Said display panel can be a single panel with multiple zones or multiple panels placed substantially close to each other. Those skilled in the art should also realize that there are different combinations of light source(s) and display panels. Such equivalent constructions do not depart from the spirit and scope of the invention in its broadest form.

111, 118, 113, 115, and 117 form an image combination system. The lens units comprises multiple lenses and multiple dichroic mirrors. Dichroic mirrors 113, 115, 117 can locate before, between, or after the lens system. Figure 2 shows a design of image combination system. The advantage is it has a very simple dichroic mirror arrangement. Three color zones on the panel are designated by a, b, and c. a, b, and c produce light in different colors. The first lens units (221 to 209) is designed in a way that the light form a and c are substantially spatially separated at the location of dichroic mirrors 203,205,207. Dichroic mirror 205 only reflects light from zone c; dichroic mirror 207 only reflects light from zone a. therefore dichroic mirror 205 and 207 are not crossed with each other. The system is simplified. The angles between the dichroic mirrors vary from 1 degree to 44 degrees. The thickness of substrate of dichroic mirror varies from 0.01 mm to 100mm. The dichroic coating layer can be coated on the front surface or rear surface of substrates, for example, coatings are on the back side of substrate 205 and 207; front side of 203.

The image combination system has many equivalent forms. It comprises at least two dichroic mirrors that redirect the color light by different angle to form full color images. The dichroic mirror are made from multilayer coating or other selectively reflection material. The dichroic mirrors are located before, within or after the lens system. Those skilled in the art should also realize such equivalent constructions do not depart from the spirit and scope of the invention in its broadest form.

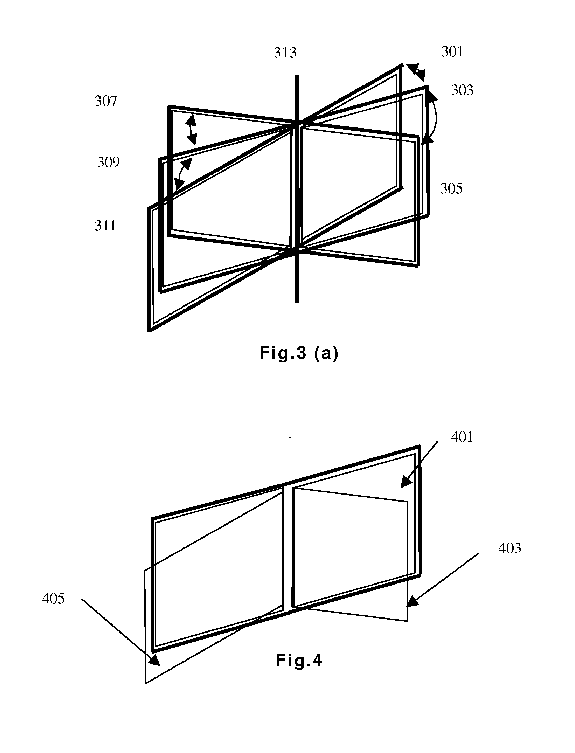

An implement of dichroic mirrors are shown in Figure 3 (a). 301 and 311 are the two parts of the first dichroic mirror, 303 and 309 are the two parts of the second dichroic mirror, 305 and 307 are the two parts of the third dichroic mirror. The reflecting surface of two parts of dichroic mirrors are substantially located on a same plane. 313 is a rotational axis. Every dichroic mirror can be rotated around the rotational axis 313 to make the RGB color images merge to a color image. Please note that the rotational axis can be a physical one, or a virtual one. The light around the rotational axis is not used, so axis size must be substantially small to improve the efficiency of the light. Special means are needed to reduce scattering light. For example, the edge of the dichroic mirrors should be made black.

Figure 4 shows another design for three dichroic mirrors. The first dichroic mirror 401 only reflects the light from Zone b; the second dichroic mirror 403 reflects the light from zone c, the third dichroic mirror 405 reflects light from zone b. One edge of the dichroic mirror 405 and 403 are arranged substantially close to the dichroic mirror 401. The first lens unit is designed to make the light from zone a and light from zone c are substantially separated at the plane of the dichroic mirrors, therefore most of the light from Zone a is reflected by the dichroic mirror 403, and most of the light from zone c is reflected by the dichroic mirror 405. This arrangement greatly simplifies system design. The light incident on the cross section cannot be used, so the cross section should be as small as possible to improve the efficiency of light. Also scattering reducing means are needed, for example, the edge of said dichroic mirror at the intersection should be made black.

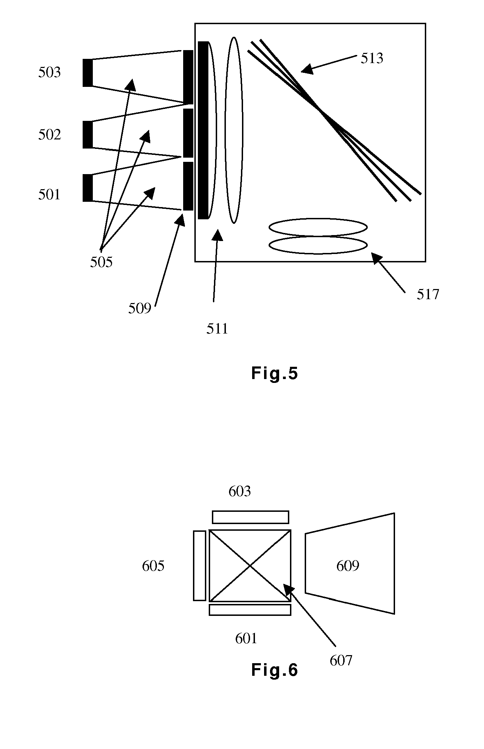

Figure 5 shows an embodiment of current invention based on LED light source. The LED light sources 501 to 503 generate the light in different colors. The color lights from light source then enter the light wave guide aka light pipe 505 to homogenize the spatial distribution and to modify the angular distribution of the light. There are gaps between light pipes to avoid color cross talking. The total size of the output face of said light pipe should be the same with the size of the display panel 509. The size of the output face of the every light pipe should be the same with the size of the corresponding display zones on the display panel. The size of the input faces of three light pipes is corresponding to the size of emitting area of the LED light source. The size of the output face and the input face of said light pipe can be the same with each other or different with each other. 511 is the first lens unit of the lens system, 513 are three dichroic mirrors that redirect the color light at different angle, 517 is the second lens unit of the lens system that project the compound images to the screen or the human's eyes. Light pipe 505 can be removed in some systems to reduce the size of the system.

Figure 6 is a schematic diagram of an embodiment of current invention based on Organic Light Emitting Diode (OLED). The elements 601, 603 and 605 are OLED display panels generating different colors. The color combining prism is used to combine the red, green, blue images to form color images. The optical system 609 projects the color images to the screen or the human's eyes.

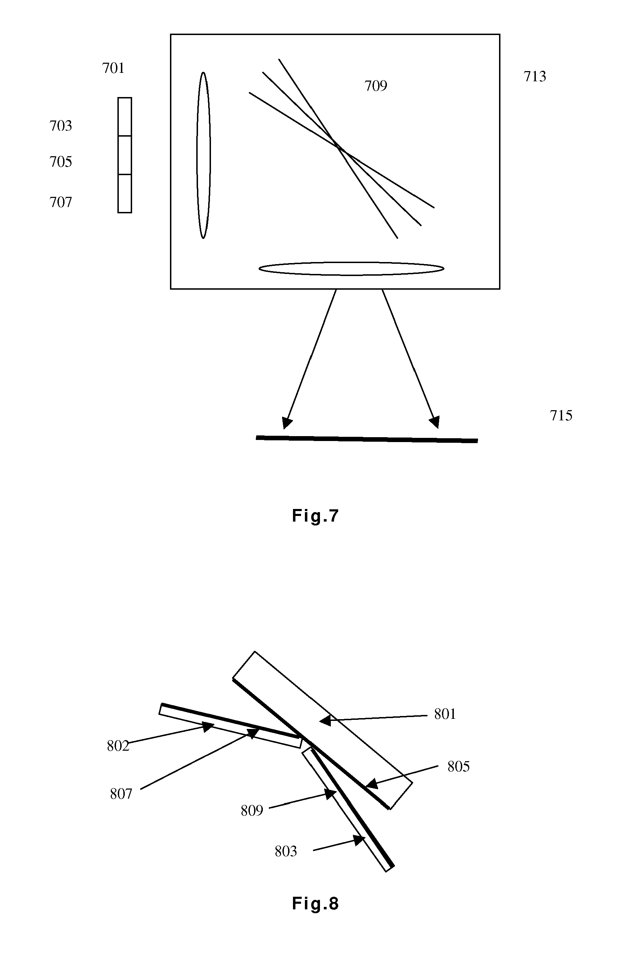

Figure 7 is a schematic diagram of an alternative embodiment of current invention based on OLED. 701 is an OLED display panel, which comprises one single panel or multiple panels substantially close to each other. The elements from 703 to 707 are the different color zones on the OLED display panel. The color light from the display panel then enter lens system 713. Three dichroic mirrors 709 are used to redirect the color light by different angle. The lens system projects the color images onto the screen or a human's eyes.

Those skilled in this field should appreciate that all disclosures in current invention regarding to the optical system is also applicable to self emitting panels.

Figure 8 shows a design of the dichroic mirror. The dichroic mirrors are important components in the system. Special considerations are needed to reduce the aberration introduced by the dichroic mirrors. The dichroic mirror 801 reflects the light from zone b of the panel. Best coating position for 801 is on the front surface so the light does not enter the substrate. The thickness of substrate of dichroic mirror varies from 0.01 mm to 100mm. please note the dichroic coating layer can be coated on the front surface or back surface of substrates, for example, coating are on the rear side of substrate 802 and 809; front side of 801. There is no light path difference is introduced. If the thickness of substrates are substantially thin, the coating layers can be applied on the front surface of substrates.

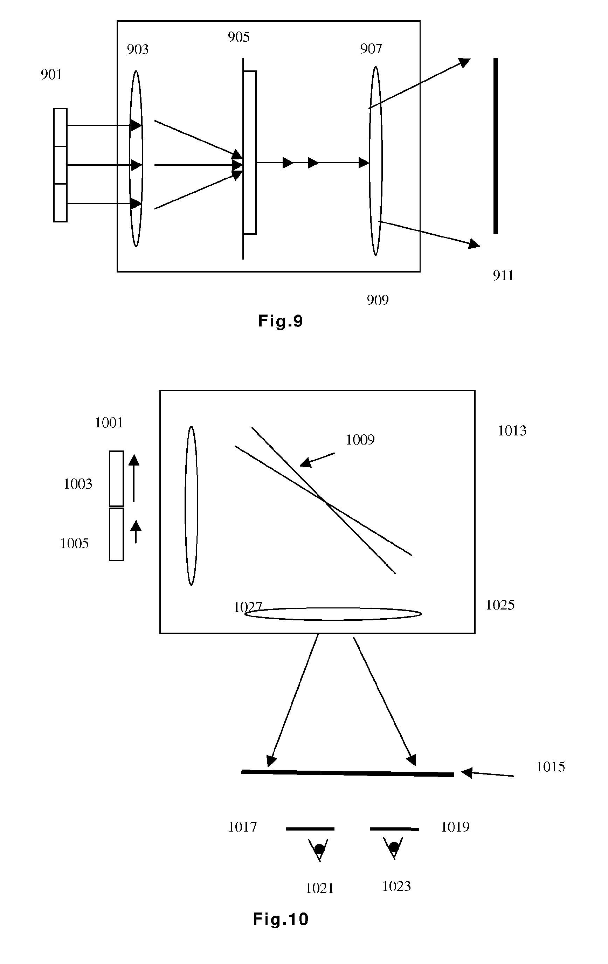

An alternative embodiment of current invention using holograph device as beam redirecting components is showed in Figure 9. Display panel 901 is a single display panel with multiple zones or multiple display panels arranged substantially close to each other. The illumination system part is not shown for simplicity. The lens system comprises lens unit 903 and 907, and a holographic component 905. 905 redirects color light to the same angle to form a compound image. The holographic device can work in transmissive or reflective methods.

Figure 10 shows an alternative embodiment of current invention. The difference compared with proceeding embodiments is that compound image is not color images but polarization images. By using a pair of polarization glasses or a parallax board, the observer's left eye only sees the image for left eye while the right eye only sees the image for right eye. The two images for viewer's different eye form a three-dimensional image. Display panel 1001 is one single panel with two zones or two panels placed substantially close to each other. One of the zones produces the image polarized in one direction. Another zone of the display panel 1005 produces the images polarized in another direction. (The illumination system is not shown in the figure for simplicity). The polarization light produced by the display panel is incident into the lens system 1013. The image system comprises two reflection mirrors to reflect different polarization lights. They redirect the different polarization lights coming from the display panel at different angles to form compound images. The lens system then projects the images to the screen or to a human's eyes. 1021 and 1023 represents a viewer's left eye and right eye respectively. 1017 and 1019 are polarizers that only allow polarized light to pass through. Therefore the left eye only sees the image coming from the first half of the display panel 1003, and the right eye only sees the image information coming from the second half of the display panel 1005. Two images compose a three-dimensional image.

Those skilled in this field should appreciate that the polarization light in this embodiment is equivalent to the color light in the other embodiments and shares the same function principle. All design disclosed in the other embodiments regarding to the light sources, lens system, are applicable to 3D system as well.

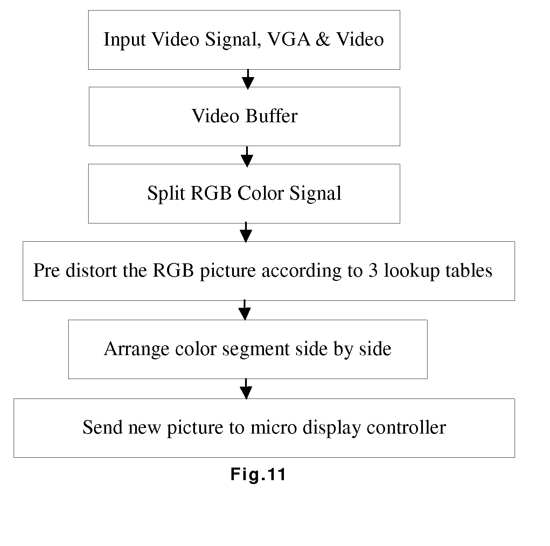

Besides the optical systems described in the various embodiments of the present invention, an electronic system is needed to drive the display panel properly. Figure 11 shows an electronic image processing system diagram of current invention. The electronics system accepts digital or analog video input signal with RGB information or 3D information. The electronic system splits the RGB signal for different zones of the display panel. The R G B pictures are then pre-distorted according some rules to compensate the distortion caused by the optical system. Those skilled in the art should appreciate that there are many different forms of hardware and/or software to implement the function of electronic video processing. Those skilled in the art should also realize that such equivalent constructions do not depart from the spirit and scope of the invention in its broadest form.

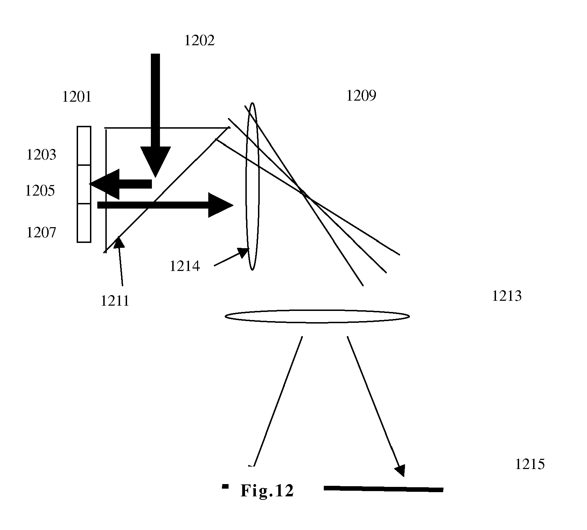

Fig.12 is diagram of an alternative embodiment wherein a reflective display panel is used. 1201 is a reflective display panel; the elements from 1203 to 1207 are display zones for the different color on the display panel 1201. 1202 is illumination light which is divided into three different color lights; 1211 is total internal reflection prism or polarization bean splitter which is generally used in the DLP or LOCS system; 1214 is the first lens unit of the lens system. 1209 are three dichroic mirrors which are used to redirect the color light by different angle. 1213 is the second lens unit of the lens system which is used to project the superposed images to the human's eyes or on the screen. The principle is basically the same as proceeding embodiments. The reflective display panel can be, but is not limited to, a mirror array (DMD / DLP), or an LCOS display panel.

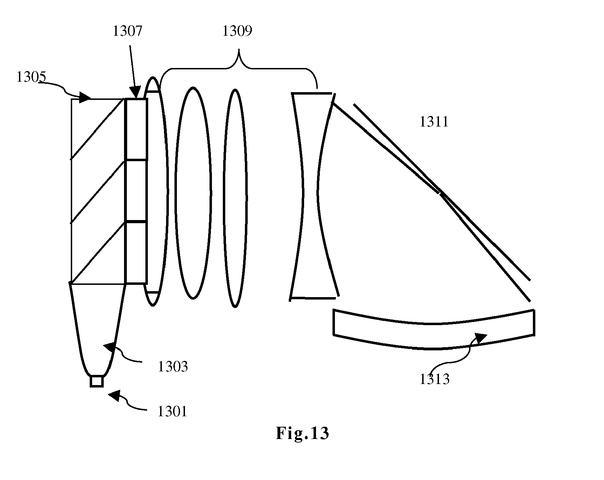

Fig.13 is diagram of an alternative embodiment based on white LEDs. LED (1301) generates white light. 1303 is a Light wave guide, aka light pipe. The cascading color splitting prism (1305) splits the white light into red (R), green (G) and blue (B) light components with substantial low loss and conducts R G B light onto a display panel 1307. There are three color areas on display panel 1307 displaying R G B information. The first lens unit (1309) conducts light to the dichroic mirror (1311). Three dichroic mirrors reflect R G B light by different angles. After passing the second lens unit (1313), a color image to the screen or human's eyes. The color combination in this embodiment is similar with other embodiment. In one embodiment, the second lens unit is eliminated.

## Claims

1. A image generation system producing compound images, comprising:
An illumination system producing at least two spatially separated illumination zones where illumination lights have different optical properties;
A single display panel with at least two zones that display the component information of compound images, or at least two display panels placed substantially close to each other that display the component information of compound images,
A lens system that encoding different lights at different angles;
A redirection means that redirect different types of light at different angles.

2. The image generation system as specified in claim 1 comprises a single display panel having more than 2 color segments.

3. The image generation system as specified in claim 1 wherein said display panel is an array of display panel with more than 2 display panels located on a substantial same plane.

4. The image generation system as specified in claim 1 wherein said display panel is self emitting display panel.

5. The image generation system as specified in claim 1 comprises wherein the illumination system producing at least two spatially separated color illumination zones; the compound images as specified in claim 1 are color images.

6. The image generation system as specified in claim 1 comprises an illumination system producing at least two spatially separated polarization illumination zones; the compound images as specified in claim 1 are 3-dimentional images.

7. The illumination system as specified in claim 1 utilizes light sources selected from high-brightness projection light lamp, LED, laser, and OLED.

8. The image generation systems as specified in claim 1 further comprises a cascading light splitting system which splits light into more than two illumination zones.

9. The illumination system specified in claim 1 further comprises at least one light pipe surrounded by low refractive index material, the light pipe forms wave guide for each color and conducts color light to corresponding zooms in the display panel.

10. The display panel(s) specified in claim 1 including but not limited to, LCD, MEMS, LCOS devices, OLED device.

11. The image generation system specified in claim 1 wherein the lens system comprises a lens substantially close to said display panel and functions as a field lens.

12. The image generation system specified in claim 5 wherein redirection means is dichroic mirrors.

13. The image generation system specified in claim 12 wherein said lens system has a location where at least two lights from said illumination zones are separated substantially; said dichroic mirrors are placed at this location; said dichroic mirrors are in single piece form and are not separated by the other dichroic mirrors.

14. The image generation system specified in claim 12 wherein thickness of said dichroic mirror is from 0.01 mm to 100 mm; and there is only air gap between any two dichroic mirrors.

15. The image generation system specified in claim 5 wherein the redirection means is a hologram device.

16. The image generation system specified in claim 2 wherein illumination system comprises at least one LED.

17. The image generation system specified in claim 16 wherein said illumination system and said display panel are connected by one of the following methods:
light wave guide, lens, and direct coupling.

18. The image generation system specified in claim 17 wherein the light wave guide is surrounded by low refractive index material to eliminate color cross talking.

19. The image generation system specified in claim 17 wherein at least one of following interfaces are laminated together: 1) interface between light source and light wave guide, 2) light wave guide and display panel, 3) display panel and the first surface of lens units.

20. The image generation system specified in claim 1 further comprises an electronic system to reformat the input video signal, split the input signal into the components; and send the components to different parts of said display panel.

21. The electronic system specified in claim 20 further comprises means to add predistortion to the image to compensate the optical distortion.

22. The image generation system that producing 3D image further comprising:
- an illumination system producing different polarization illumination zones spatially separated.
- one display panel with 2 zones or two display panels substantially close to each other wherein two images of different polarization are displayed on the panel.
- a lens system that encoding different polarization at different angles;
- Two reflection mirrors that reflect the different polarized light at different angles;
- two polarizors, accommodating right and left eyes.

23. The image generation system specified in claim 22 where in the display panel has multiple color areas on it.

24. The image generation system specified in claim 22 wherein the display panel comprising multiple panels located on a same plane.

25. A color image generation system, comprising:
- -A single organic LED panel having at least two color display zones that display the component information of compound images, or at least two display panels placed substantially close to each other that display the component information of compound images,
- -A lens system that encoding different lights at different angle;
- -A redirection means that redirect different types of light at different angles;
- -A second lens system.

26. The image generation system specified in claim 21 wherein said lens system produces images directly to eyes for near to eye displays or project image onto the screen.
